# EUROPÄISCHE PATENTANMELDUNG

(11) **EP 3 459 613 A1**
(43) Veröffentlichungstag der Anmeldung: **27.03.2019**
(21) Anmeldenummer: 17192621.5
(22) Anmeldetag: 22.09.2017
(51) Int. Cl.: B01D 45/08, F01D 25/32, F22B 37/30

(54) **DAMPFSIEB FÜR EINE DAMPFTURBINE**

(71) Anmelder: Siemens Aktiengesellschaft, 80333 München (DE)
(72) Erfinder: Bell, Ralf, 45478 Mülheim an der Ruhr (DE); Bergmann, Anett, 45527 Hattingen (DE); Bieniakonski, Christoph, 45128 Essen (DE); Busschulte, Marius, 46562 Voerde (DE); Ernst, Stephan, 46537 Dinslaken (DE); Kocdemir, Bora, 45357 Essen (DE); Legenbauer, Markus, 45279 Essen (DE); Maguire, Adam, 46147 Oberhausen (DE); Oehmichen, Michael, 45478 Mülheim an der Ruhr (DE); Ostwald, Daniel, 46047 Oberhausen (DE); Stanka, Ulrich, 45355 Essen (DE); Ulma, Andreas, 45481 Mülheim an der Ruhr (DE); van der Lest, Niclas, 45147 Essen (DE)

(57) **Zusammenfassung**

Die Erfindung betrifft ein Dampfsieb (8) für eine Dampfturbine, wobei das Dampfsieb (8) einen Siebmantel (15) aufweist, der eine Vielzahl von Sieböffnungen zum Durchtritt von Dampf ausweist, wobei der Siebmantel (15) eine über die Siebfläche betrachtet variierende Dicke aufweist, wobei im Bereich eines Einströmbereiches (9) der Siebmantel (15) derart verdickt ausgeführt ist, dass ein einströmender Dampf optimal in zwei Teilströme um den Siebmantel (15) abgelenkt wird.

## Beschreibung

Die Erfindung betrifft ein Dampfsieb mit einer Vielzahl von Sieböffnungen zum Durchtritt von Dampf, die in einem die Siebfläche definierenden Siebmantel des Dampfsiebes ausgebildet sind, wobei der Siebmantel eine über die Siebfläche betrachtet variierende Dicke besitzt, wobei das Dampfsieb ferner einen Einströmbereich aufweist, der zum Anströmen eines Einströmdampfes ausgebildet ist, wobei der Einströmdampf aus einer Einströmrichtung auf den Einströmbereich trifft.

Desweiteren betrifft die Erfindung ein Verfahren zur Herstellung für ein solches Dampfsieb.

Dampfsiebe werden beispielsweise in Ventilen in Dampfkraftwerken eingesetzt, wobei es vielfältige Ausführungen gibt, die im Stand der Technik bekannt sind. Anwendungen von Dampfsieben finden sich beispielsweise in Dampfströmungspassagen von Dampfturbinenanlagen, um in der betreffenden Dampfströmungspassage unerwünschte Fremdkörper abzufangen, so dass stromabwärts des Dampfsiebes nachfolgende Anlagenkomponenten vor Beschädigungen geschützt sind. Allerdings ist es bei den derzeitigen Dampfsieben nachteilig, dass eine Vergrößerung des Strömungswiderstandes der betreffenden Dampfströmungspassage einhergeht. Dadurch entsteht ein entsprechender Druckverlust infolge des Strömungswiderstandes, was zu einer Verringerung des Wirkungsgrades des Gesamtsystems führt.

Ein weiteres Problem beim Einsatz von Dampfsieben besteht darin, dass diese oftmals hohen Belastungen (zum Beispiel Schwingungsbelastungen oder Temperaturschwankungen) ausgesetzt sind, welche das Dampfsieb nach einer relativ kurzen Einsatzzeit schädigen oder sogar zerstören können.

In einem Schadensfall ist oftmals ein ganzheitlicher Ersatz von Dampfsieben erforderlich, was allerdings eine Erhöhung der Kosten und einer Erhöhung der Beschaffungszeit zur Folge hat.

Es wurde erkannt, dass Optimierungen möglich sind hinsichtlich Durchströmbarkeit und Strömungsführung. Allerdings ist die Umsetzbarkeit von besseren Strömungsführungen im Dampfsieb durch die eingeschränkte Umsetzbarkeit mittels traditioneller Fertigungsmethoden nicht möglich. Darüber hinaus ist das Strömungsverhalten in den Bereichen, wo die Dampfsiebe eingesetzt werden, sehr komplex, so dass in manchen Bereichen der Dampfsieboberfläche eine höhere Belastung und / oder ein anderer Anströmwinkel vorherrscht. Dies führt ebenfalls zu einer erhöhten Schadensbelastung.

Es ist bekannt, Dampfsiebe aus einem Zylinder zu fertigen, wobei Bohrungen auf der Oberfläche angeordnet werden. Bei einem anderen Design werden schmale teils gewellte Blechstreifen verwendet, um eine Siebfläche auszubilden.

Es ist Aufgabe der Erfindung, ein Dampfsieb bzw. ein Verfahren zur Herstellung eines solchen Dampfsiebes aufzuzeigen, das ein verbessertes Umströmungsverhalten aufweist.

Gelöst wird diese Aufgabe durch ein Dampfsieb mit einer Vielzahl von Sieböffnungen zum Durchtritt von Dampf, die in einem die Siebfläche definierenden Siebmantel des Dampfsiebes ausgebildet sind, wobei der Siebmantel eine über die Siebfläche betrachtet variierende Dicke besitzt, wobei das Dampfsieb ferner einen Einströmbereich aufweist, der zum Anströmen eines Einströmdampfes ausgebildet ist, wobei der Einströmdampf aus einer Einströmrichtung auf den Einströmbereich trifft, wobei der Siebmantel im Bereich des Einströmbereiches verdickt ausgeführt ist.

Mit der Erfindung wird das Ziel verfolgt, das Dampfsieb festigkeits-, strömungs- und materialoptimiert zu gestalten. Daher wird vorgeschlagen, im Einströmbereich die Siebwand stärker auszuführen und strömungsoptimal zu formen. Dadurch wird der Verschleiß und Auswaschungen verringert. Der Siebmantel wird dabei im Bereich des Einströmbereiches, der zum Anströmen eines Einströmdampfes ausgebildet ist, wobei der Einströmdampf aus einer Einströmrichtung auf den Einströmbereich trifft, verdickt ausgeführt. Dabei wird der aus einer Einströmrichtung auf den Einströmbereich treffende Dampf in zwei Teilströme aufgeteilt, wovon der eine Teil in die eine Umfangsrichtung und der andere Teil in die andere Umfangsrichtung des Siebmantels umströmt. Durch diese optimierte Designänderung sinken die Druckverluste über das Dampfsieb. Damit steigt der Wirkungsgrad der betriebenen Anlage. Ein weiterer Vorteil ist, dass durch die reduzierten Druckverluste sich auch die Energieumsetzung innerhalb des Dampfsiebes reduziert, wodurch der Anteil an mechanischer Bewegungsenergie im Dampfsieb geringer ist, was zu einem reduzierten Verschleiß bzw. reduzierter mechanischer Belastung des Dampfsiebes führt.

Insbesondere im Bereich der Einströmung wird sich der Verschleiß verringern.

In den Unteransprüchen sind vorteilhafte Weiterbildungen angegeben.

So wird in einer ersten vorteilhaften Weiterbildung der Einströmbereich mit einer Einströmkante ausgebildet, der dazu führt, dass der Einströmdampf im Wesentlichen um den Siebmantel umgelenkt wird. Die Einströmkante wird hierbei strömungsoptimiert so gestaltet, dass die beiden Teilströme möglichst gleich groß sind.

In einer weiteren vorteilhaften Weiterbildung weist der Siebmantel im Wesentlichen eine in einer Längsrichtung ausgebildete Zylinder- bzw. Konusform auf, wobei die Einströmkante entlang der Längsrichtung ausgebildet ist.

Durch diese Maßnahme wird es möglich, den Einströmdampf optimal in zwei Teilströme aufzuteilen.

Der Einströmbereich ist hierbei vorteilhafterweise keilförmig ausgebildet.

In einer besonders vorteilhaften Weiterbildung wird der Einströmbereich mit einer Schutzschicht ausgebildet.

Die Schutzschicht führt dazu, dass die Oberfläche infolge von unerwünschten größeren Fremdpartikeln zu keinen größeren Beschädigungen des Dampfsiebes und der nachfolgenden Anlagenkomponenten führt.

Vorteilhafterweise ist der Siebmantel im Querschnitt gesehen ringförmig ausgebildet und eine in Längsrichtung ausgeführte lokale Verdickung führt zu einer Stabilisierung des Siebmantels.

In herkömmlichen Siebmänteln ist die Geometrie zylinderförmig. Die Erfindung schlägt vor, sich von dieser Geometrievorgabe zu trennen und lokale Verdickungen auszubilden, die zu einer Stabilisierung des Siebmantels führen.

Vorteilhafterweise ist die Verdickung beispielsweise gegenüberliegend zur Einströmkante angeordnet. In einer weiteren vorteilhaften Weiterbildung werden weitere lokale Verdickungen angeordnet und zwar in einer 3-Uhr-Position und einer 9-Uhr-Position, wobei der Einströmbereich in einer 12-Uhr-Position angeordnet ist.

Erfindungsgemäß wird das Dampfsieb mit der Additive-Manufacturing-Methode hergestellt.

Vorteilhafterweise wird die Schutzschicht im Bereich der Einströmung ebenfalls mit der Additive-Manufacturing-Methode hergestellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese sollen die Ausführungsbeispiele nicht maßgeblich darstellen, vielmehr ist die Zeichnung, wo zur Erläuterung dienlich, in schematisierter und / oder leicht verzerrter Form ausgeführt. Im Hinblick auf Ergänzungen der in der Zeichnung unmittelbar erkennbaren Lehren wird auf den einschlägigen Stand der Technik verwiesen.

Gleiche Bauteile oder Bauteile mit gleicher Funktion sind dabei mit gleichen Bezugszeichen gekennzeichnet.

Es zeigen:
- Figur 1: eine Seitenansicht eines Dampfventils
- Figur 2: eine Schnittdarstellung durch das Dampfventil

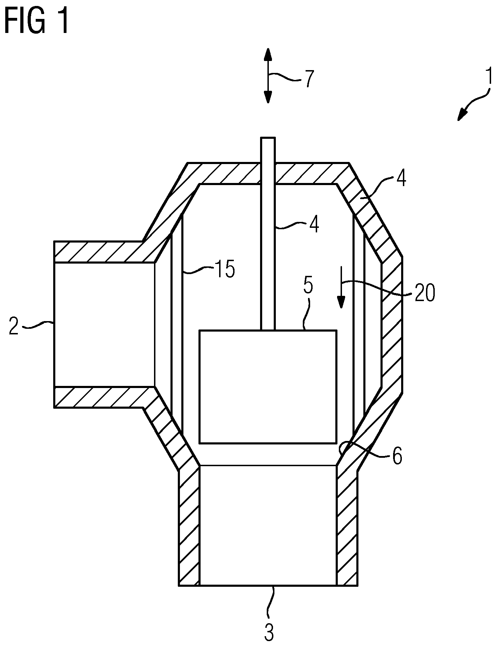

Die Figur 1 zeigt eine Seitenansicht eines Ventils 1, das beispielsweise in einer Dampfkraftanlage eingesetzt werden kann. Das Ventil 1 weist eine Einströmöffnung 2 und eine Ausströmöffnung 3 auf. Im Betrieb strömt ein Dampf durch die Einströmöffnung 2 und wird in einem Dampfventilgehäuse 4 umgelenkt und strömt aus der Ausströmöffnung 3 beispielsweise in eine nicht näher dargestellte Dampfturbine. In der in Figur 1 dargestellten Ausführungsform wird der Dampf um 90 Grad von der Einströmöffnung 2 in die Ausströmöffnung 3 abgelenkt. Innerhalb des Dampfventilgehäuses 4 ist ein Dampfventilkegel 5 angeordnet. Der Dampfventilkegel 5 ist in einer Ventilkegel-Längsrichtung 7 verschiebbar ausgebildet. Während des Betriebes wird die Dampfmenge durch das Ventil 1 durch die Position des Dampfventilkegels 5 geregelt. Wenn der Dampfventilkegel 5 ganz oben angeordnet ist, ist das Ventil 1 komplett geöffnet. Wenn der Dampfventilkegel 5 ganz unten bis zu einer Anschlagsposition bewegt wird, wo der Dampfventilkegel 5 einen Ventilsitz 6 berührt, ist das Ventil 1 komplett geschlossen.

Damit Fremdpartikel nicht in die Dampfturbine gelangen können, ist innerhalb des Dampfventilgehäuses 4 ein Dampfsieb 8 angeordnet. Das Dampfsieb 8 ist hierbei im Wesentlichen um den Dampfventilkegel 5 angeordnet und so in dem Dampfventilgehäuse 4 befestigt, dass ein Fremdpartikel, das durch die Einströmöffnung 2 strömt, zwingend durch das Dampfsieb 8 aufgehalten wird und ggf. gefiltert wird und somit nicht zur Ausströmöffnung 3 gelangt. Dazu wird das Dampfsieb 8 mit mehreren Sieböffnungen versehen, die im einfachsten Fall als Bohrungen ausgeführt sind (nicht dargestellt).

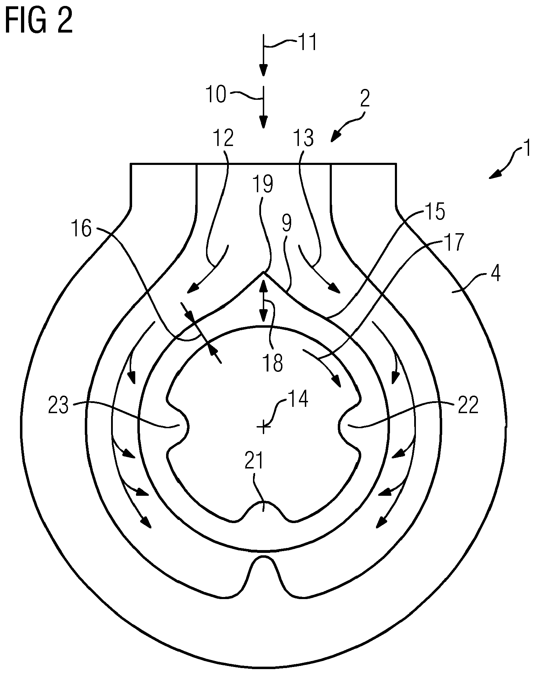

In Figur 2 ist eine Schnittansicht von oben gemäß der Figur 1 durch das Ventil 1 dargestellt. Der Dampf strömt hierbei durch die Einströmöffnung 2 von oben in das Ventil 1 und verteilt sich innerhalb des Dampfventilgehäuses 4 um das Dampfsieb 8. Das Dampfsieb 8 weist dabei einen Einströmbereich 9 auf, der zum Anströmen eines Einströmdampfes 10 ausgebildet ist. Der Einströmdampf 10 kommt aus einer Einströmrichtung 11 und trifft auf den Einströmbereich 9. Der Einströmdampf 10 wird hierbei in einen ersten Teilstrom 12 und einen zweiten Teilstrom 13 aufgeteilt. Durch Bohrungen im Dampfsieb 8 (nicht dargestellt) strömt der erste Teilstrom 12 und der zweite Teilstrom 13 durch das Dampfsieb 8 in einen Mittelbereich 14 und von dort zur Ausströmöffnung 3.

Das Dampfsieb 8 weist eine Vielzahl von Sieböffnungen zum Durchtritt von Dampf auf, die in einem die Siebfläche definierenden Siebmantel 15 des Dampfsiebes 8 ausgebildet sind. Der Siebmantel 15 ist im Bereich des Anströmbereiches 9 verdickt ausgeführt. Das bedeutet, dass eine Dicke 16 in einer Umfangsrichtung 17 im Wesentlichen konstant ist bis auf den Einströmbereich 9, wo die Einströmbereich-Dicke 18 größer ist als die Dicke 16. Die Einströmbereich-Dicke 18 kann hierbei bis zu einem Faktor 5 größer sein als die Dicke 16. Der Einströmbereich 9 weist ferner eine Einströmkante 19 auf, der den Einströmdampf 10 im Wesentlichen um den Siebmantel 15 umlenkt.

Der Siebmantel 15 ist im Wesentlichen in einer Längsrichtung 20 ausgebildet und weist eine Zylinder- bzw. Konusform auf. Die Einströmkante 19 ist hierbei entlang der Längsrichtung 20 ausgebildet.

Wie in Figur 2 zu sehen, ist der Einströmbereich 9 des Siebmantels 8 keilförmig ausgebildet.

Auf dem Einströmbereich 9 ist eine Schutzschicht (nicht dargestellt) aufgebracht.

Wie in Figur 2 zu sehen, ist der Siebmantel 15 im Querschnitt gesehen ringförmig ausgebildet und weist eine in Längsrichtung 20 ausgeführte lokale Verdickung 21 zur Stabilisierung des Siebmantels 15 auf.

Der Einströmbereich 9 ist hierbei in einer 12-Uhr-Position angeordnet, wobei die lokale Verdickung 21 gegenüberliegend in einer 6-Uhr-Position ausgebildet ist. Die lokale Verdickung 21 zeigt in Richtung Mittelbereich 14 und ist im Wesentlichen halbkreisförmig ausgebildet. Andere Formen, wie zum Beispiel eine Dreiecksform ist möglich.

Der Siebmantel 15 weist in einer 3-Uhr-Position und 9-Uhr-Position eine zweite 22 bzw. dritte Verdickung 23 auf. Die zweite Verdickung 22 und die dritte Verdickung 23 ist im Wesentlichen halbkreisförmig ausgebildet, kann aber wie bei der lokalen Verdickung 21 ebenfalls dreieckförmig oder sonstige Formen aufweisen. Weitere Verdickungen sind ebenfalls möglich.

Das Dampfsieb 2 wird mittels der Additive-Manufacturing-Methode hergestellt. Die Schutzschicht (nicht dargestellt) wird ebenfalls mit der Additive-Manufacturing-Methode hergestellt.

Obwohl die Erfindung im Detail durch das bevorzugte Ausführungsbeispiel näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

## Patentansprüche

1. Dampfsieb (8)
mit einer Vielzahl von Sieböffnungen zum Durchtritt von Dampf, die in einem die Siebfläche definierenden Siebmantel (15) des Dampfsiebes (8) ausgebildet sind,
wobei der Siebmantel (15) eine über die Siebfläche betrachtet variierende Dicke besitzt,
wobei das Dampfsieb (8) ferner einen Einströmbereich (9) aufweist, der zum Anströmen eines Einströmdampfes (10) ausgebildet ist, wobei der Einströmdampf (10) aus einer Einströmrichtung (11) auf den Einströmbereich (9) trifft, **dadurch gekennzeichnet, dass**
der Siebmantel im Bereich des Einströmbereiches verdickt ausgeführt ist.

2. Dampfsieb (8) nach Anspruch 1,
wobei der Einströmbereich (9) eine Einströmkante (19) aufweist, der den Einströmdampf (10) im Wesentlichen um den Siebmantel (15) umlenkt.

3. Dampfsieb (8) nach Anspruch 2,
wobei der Siebmantel (15) im Wesentlichen eine in einer Längsrichtung (20) ausgebildete Zylinder- bzw. Konusform aufweist, wobei die Einströmkante (19) entlang der Längsrichtung (20) ausgebildet ist.

4. Dampfsieb (8) nach Anspruch 1,2 oder 3,
wobei der Einströmbereich keilförmig ausgebildet ist.

5. Dampfsieb (8) nach einem der vorhergehenden Ansprüche, mit einer Schutzschicht auf dem Einströmbereich (9).

6. Dampfsieb (8) nach einem der vorhergehenden Ansprüche,
wobei der Siebmantel (15) im Querschnitt gesehen ringförmig ausgebildet ist und eine in Längsrichtung (20) ausgeführte lokale Verdickung (21) zur Stabilisierung des Siebmantels (15) aufweist.

7. Dampfsieb (8) nach Anspruch 6,
wobei die lokale Verdickung (21) gegenüberliegend zum Einströmbereich (9) ausgebildet ist.

8. Dampfsieb (8) nach Anspruch 6 oder 7,
wobei der Einströmbereich (9) an einer 12-Uhr-Position und die lokale Verdickung (21) an einer 6-Uhr-Position angeordnet ist, wobei eine zweite Verdickung (22) an der 3-Uhr-Position und eine dritte Verdickung (23) an der 9-Uhr-Position angeordnet ist.

9. Verfahren zur Herstellung eines Dampfsiebes (8) ausgebildet nach einem der Ansprüche 1 bis 8,
wobei das Dampfsieb (8) mit der Additive-Manufacturing-Methode hergestellt wird.

10. Verfahren nach Anspruch 9,
wobei die die Schutzschicht mit Additive Manufacturing hergestellt wird.
